# EUROPÄISCHE PATENTSCHRIFT

(11) **EP 0 523 261 B1**
(45) Veröffentlichungstag und Bekanntmachung des Hinweises auf die Patenterteilung: **08.06.1994**
(21) Anmeldenummer: 91111739.8
(22) Anmeldetag: 15.07.1991
(51) Int. Cl.: G03B 21/10, G03B 21/30

(54) **Diaprojektor zur Wand- und Mattscheibenprojektion**
Combined apparatus for the projection and back-projection of slides
Appareil de projection et de rétroprojection de diapositives

(43) Veröffentlichungstag der Anmeldung: 20.01.1993
(73) Patentinhaber: REFLECTA GMBH FOTO FILM PROJEKTION, D-91126 Schwabach (DE)
(72) Erfinder: Kronbauer, Hermann, W-8011 Aschheim (DE)
(74) Vertreter: LOUIS, PÖHLAU, LOHRENTZ & SEGETH

(56) Entgegenhaltungen:
- EP-A- 0 136 951
- WO-A-87/00306
- FR-A- 2 537 737
- PATENT ABSTRACTS OF JAPAN vol. 6, no. 96 (P-120)(974) 4. Juni 1982 ; & JP-A-57 030 826

## Beschreibung

Die Erfindung betrifft einen Diaprojektor zur Wand- und zur Mattscheibenprojektion, mit einem Umlenkspiegelsystem und einer Mattscheibe, die dem Linsensystem des Diaprojektors zur Mattscheibenprojektion vorsetzbar sind.

Bei den bekannten Diaprojektoren zur Wand- und Mattscheibenprojektion ist das Umlenkspiegelsystem und die Mattscheibe in einem Gehäusedeckel des Diaprojektors geeignet vorgesehen, um im Gehäusedeckel entweder platzsparend zusammengelegt unterbringbar oder zur Mattscheibenprojektion geeignet aufgeklappt dem Linsensystem des Diaprojektors vorgesetzt zu werden. Zur Wandprojektion wird bei diesen Diaprojektoren der Gehäusedeckel aufgeklappt oder vom Diaprojektor entfernt, was einen nicht zu vernachlässigenden Handhabungsaufwand darstellt.

Beispiele von solchen Diaprojektoren sind in EP-A-2 537 737, WO-A-8 700 306 und JP-A-57 030 826 offenbart.

Desgleichen sind Diaprojektoren bekannt, die überhaupt nur zur Mattscheibenprojektion geeignet sind, wenn der das Umlenkspiegelsystem und die Mattscheibe aufweisende Gehäusedeckel vom Diaprojektor nicht entfernbar ist.

Der Erfindung liegt die Aufgabe zugrunde einen Diaprojektor der eingangs genannten Art zu schaffen, der sich sowohl zur Wandprojektion als auch zur Mattscheibenprojektion eignet, wobei der Bedienungsaufwand des Diaprojektors für eine Wandprojektion oder für eine Mattscheibenprojektion vernachlässigbar gering ist.

Diese Aufgabe wird erfindungsgemäß durch die Merkmale des Anspruchs 1 gelöst. Hierbei sind das Umlenkspiegelsystem und die Mattscheibe an einer Verstelleinrichtung vorgesehen, die zur Wandprojektion in einem unter dem Diaprojektor vorhandenen Gehäuseabteil platzsparend zusammengelegt unterbringbar und zur Mattscheibenprojektion aus dem Gehäuseabteil herausbewegbar ist. Ein derartiger Diaprojektor ist einfach zwischen der Wandprojektions-Stellung und der Mattscheibenprojektions-Stellung wunschgemäß verstellbar, wobei sich außerdem der Vorteil ergibt, daß sich durch das unter dem Diaprojektor vorhandene Gehäuseabteil eine gute Standsicherheit des Diaprojektors ergibt.

Als zweckmäßig hat es sich erwiesen, wenn die Verstelleinrichtung eine aus dem Gehäuseabteil linear herausbewegbare und um eine erste Gelenkachse vor das Linsensystem hochschwenkbare, teleskopartig verlängerbare Grundeinrichtung mit einem zum Linsensystem zugehörigen ersten Spiegel und mit einem dritten Spiegel aufweist, wobei mit der Grundeinrichtung mittels Verbindungsorganen eine Spiegelhalterung für einen zweiten Spiegel und eine Halterung für die Mattscheibe gelenkig derart verbunden sind, daß in der Mettscheibenprojektions-Stellung ein aufrechtes Bild durch einen entsprechenden Projektionslichtstrahl jeweils divergierend vom Linsensystem zum ersten Spiegel, von dort zum zweiten Spiegel, vom zweiten Spiegel zum dritten Spiegel und von diesem als entsprechend vergrößertes aufrechtes Bild zur Mattscheibe umgelenkt wird. Eine derartige Verstelleinrichtung ist mit geringem Gewicht und gleichzeitig guter mechanischer Stabilität realisierbar. Außerdem ist der Kraftaufwand zur Verstellung der Verstelleinrichtung zwischen der Wandprojektions- bzw. Ruhestellung und der Mattscheiben-Projektionsstellung gering.

Die teleskopartig verlängerbare Grundeinrichtung kann auf beiden Seiten des Diaprojektors je ein Basisteil und ein relativ zum Basisteil teleskopartig verlängerbares Verlängerungsteil aufweisen, wobei das Basisteil im Gehäuseabteil linear beweglich geführt und um eine Schwenkachse vor das Linsensystem hochschwenkbar ist. Bei einer solchen Ausbildung des Diaprojektors kann der erste Spiegel am Basisteil geeignet beweglich gelagert und der dritte Spiegel am Verlängerungsteil befestigt sein.

Vorteilhaft ist es, wenn die Spiegelhalterung, an welcher der zweite Spiegel befestigt ist, auf beiden Seiten des Diaprojektors mittels je zweier ungleich langer Verbindungsorgan mit dem zugehörigen Verlängerungsteil gelenkig verbunden ist, wobei das längere Verbindungsorgan mit seinem einen Endabschnitt mit dem jederzeit am Basisteil geführten ersten Endabschnitt des Verlängerungsteiles und das kürzere Verbindungsorgan mit seinem ersten Endabschnitt mit dem aus dem Basisteil teleskopartig herausbewegbaren zweiten Endabschnitt des Verlängerungsteiles und der zweite Endabschnitt des kürzeren und des längeren Verbindungsorganes voneinander beabstandet jeweils mit der Spiegelhalterung für den zweiten Spiegel gelenkig verbunden sind. Die Halterung für die Mattscheibe ist hierbei mit der Spiegelhalterung für den zweiten Spiegel und mit dem zweiten Endabschnitt jedes der beiden seitlichen längeren Verbindungsorgane vorzugsweise gelenkig verbunden.

Ein kompakter, gut zu handhabender Diaprojektor ergibt sich, wenn die Mattscheibe mit ihrer zugehörigen Halterung, die Spiegelhalterung für den zweiten Spiegel und die Verbindungsorgane in den zwischen den beiden seitlichen Verlängerungsteilen der teleskopartig verlängerbaren Grundeinrichtung festgelegten Raum zusammenschwenkbar sind.

Ein komfortabler Diaprojektor ergibt sich, wenn die Verstelleinrichtung mittels eines Antriebsmotors zwischen der platzsparend zusammengelegten Ruhe- bzw. Wandprojektions-Stellung und der aufgeschwenkten Mattscheibenprojektions-Stellung verstellbar ist. Bei einer einfacheren, preisgünstigeren Variante des erfindungsgemäßen Diaprojektors ist die Verstelleinrichtung manuell zwischen der Ruhe- bzw. Wandprojektions-Stellung und der Mattscheibenprojektions-Stellung verstellbar. Unabhängig davon, ob die Verstelleinrichtung manuell oder motorisch betätigbar ist, wirken die einzelnen Elemente derart zusammen, daß in der Mattscheibenprojektions-Stellung die drei Spiegel und die Mattscheibe einander genau passend zugeordnet sind, um ein aufrechtes Bild vom Diaprojektor auf der Mattscheibe aufrecht und entsprechend vergrößert abzubilden.

Weitere Einzelheiten, Merkmale und Vorteile ergeben sich aus der nachfolgenden Beschreibung eines in der Zeichnung dargestellten Ausführungsbeispieles des erfindungsgemäßen Diaprojektors. Es zeigen:
- Fig. 1: eine Seitenansicht des Diaprojektors in der Mettscheibenprojektions-Stellung, und
- Fig. 2: eine Seitenansicht des Diaprojektors gemäß Fig. 1 in der Wandprojektions-Stellung.

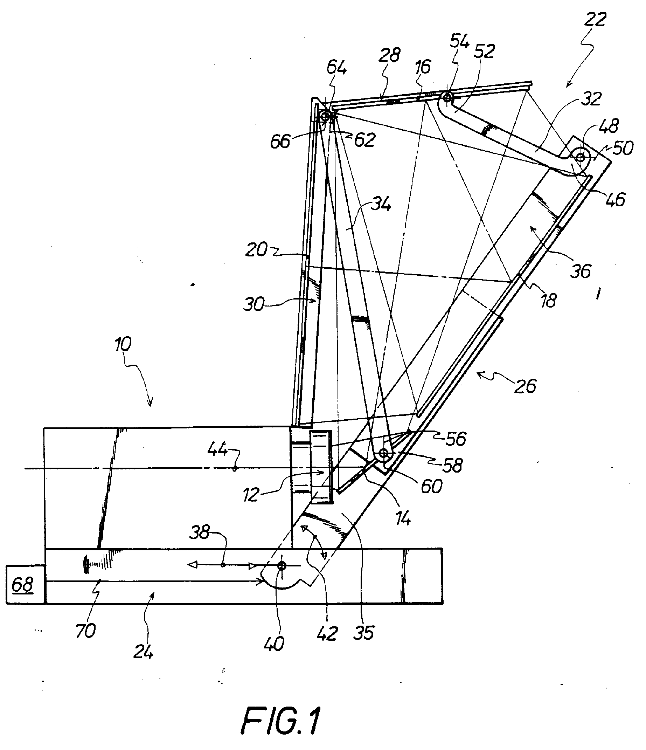

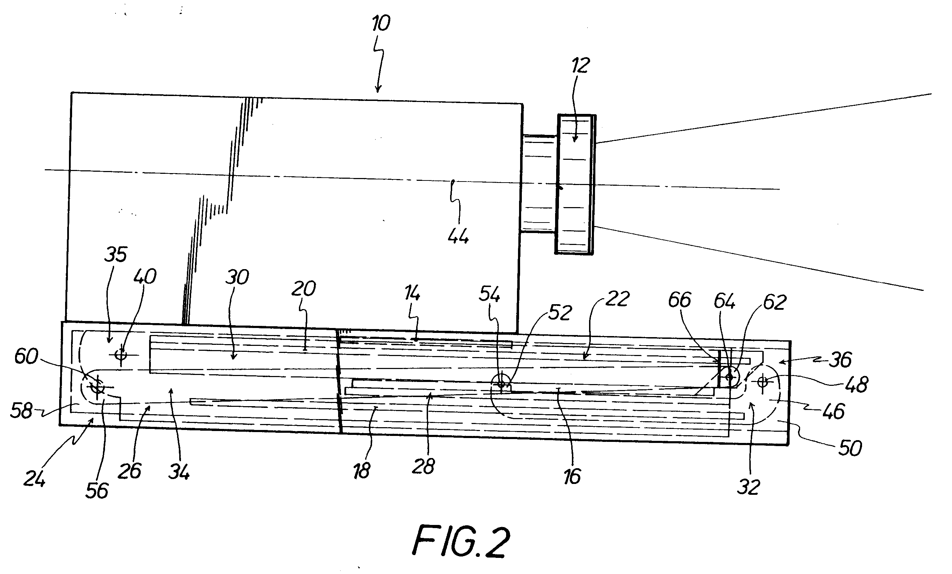

Fig. 1 zeigt in einer Seitenansicht einen Diaprojektor 10, der zwischen einer Wandprojektions-Stellung und einer Mattscheibenprojektions-Stellung verstellbar ist. In Fig. 1 ist der Diaprojektor 10 -wie bereits erwähnt wurde- in der Mattscheibenprojektions-Stellung gezeichnet. Der Diaprojektor 10 weist ein Linsensystem 12 auf, dem ein Umlenkspiegelsystem bestehend aus einem ersten Spiegel 14, einem zweiten Spiegel 16, einem dritten Spiegel 18, sowie eine Mattscheibe 20 vorsetzbar sind. Das aus den Spiegel 14, 16 und 18 bestehende Umlenkspiegelsystem und die Mattscheibe 20 sind an einer Verstelleinrichtung 22 vorgesehen, die zur Wandprojektion platzsparend in einem unter dem Diaprojektor 10 vorhandenen Gehäuseabteil 24 zusammenlegbar ist, wie aus Fig. 2 ersichtlich ist.

Die Verstelleinrichtung 22 weist eine Grundeinrichtung 26 für den ersten Spiegel 14 und den dritten Spiegel 18, eine Spiegelhalterung 28 für den zweiten Spiegel 16, und eine Halterung 30 für die Mattscheibe 20, sowie seitliche Verbindungsorgane 32 und 34 auf, mit welchen die Spiegelhalterung 28 für den zweiten Spiegel 16 und die Halterung 30 für die Mattscheibe 20 mit der Grundeinrichtung 26 geeignet gelenkig verbunden sind. Die Grundeinrichtung 26 weist auf beiden Seiten des Diaprojektors 10 je ein Basisteil 34 und ein relativ zum Basisteil 34 teleskopartig verschiebbares Verlängerungsteil 36 auf, wobei das Basisteil 34 im Gehäuseabteil 24 linear beweglich geführt ist, was durch den Pfeil 38 angedeutet ist. Außerdem ist das Basisteil 34 um eine erste Gelenkachse 40 vor das Linsensystem 12 des Diaprojektors 10 hochschwenkbar, was in Fig. 1 durch den Pfeil 42 angedeutet ist.

Der erste Spiegel 14 ist am Basisteil 34 der Grundeinrichtung 26 geeignet beweglich gelagert, so daß er in der in Fig. 1 dargestellten Mattscheibenprojektions-Stellung unter einem geeigneten Winkel gegen die optische Achse 44 des Linsensystemes 12 geneigt vor dem Linsensystem 12 positioniert ist. Der dritte Spiegel 18 ist am Verlängerungsteil 36 der teleskopartig verstellbaren Grundeinrichtung 26 befestigt.

Aus Fig. 1 ist ersichtlich, daß die seitlichen Verbindungsorgane 32 und 34 ungleich lang sind. Jedes der beiden seitlichen kürzeren Verbindungsorgane 32 ist mit seinem ersten Endabschnitt 46 mittels einer zweiten Gelenkachse 48 mit dem zweiten Endabschnitt 50 des Verlängerungsteiles 36 der Grundeinrichtung 26 gelenkig verbunden. Mit seinem zweiten Endabschnitt 52 ist jedes kürzere Verbindungsorgan 32 mittels einer dritten Gelenkachse 54 mit der Spiegelhalterung 28 für den zweiten Spiegel 16 gelenkig verbunden.

Jedes der beiden seitlichen längeren Verbindungsorgane 34 ist mit seinem ersten Endabschnitt 56 mit dem ersten Endabschnitt 58 des Verlängerungsteiles 36 der Grundeinrichtung 16 mittels einer vierten Gelenkachse 60 gelenkig verbunden. Der zweite Endabschnitt 62 jedes seitlichen längeren Verbindungsorganes 34 ist mittels einer fünften Gelenkachse 64 sowohl mit der Spiegelhalterung 28 für den zweiten Spiegel 16 als auch mit der Halterung 30 für die Mattscheibe 20 gelenkig verbunden. Die Halterung 30 für die Mattscheibe 20 ist außerdem mit einem Anschlag 66 ausgebildet, um in der aufgeklappten Mattscheibenprojektions-Stellung eine passende Position einzunehmen.

Die einzelnen Elemente der Verstelleinrichtung 22 sind hierbei derart dimensioniert bzw. die einzelnen Gelenkachsen der Verstelleinrichtung 22 sind hierbei derart vorgesehen, daß es problemlos möglich ist, die Verstelleinrichtung 22 zwischen der in Fig. 1 gezeichneten Mattscheibenprojektions-Stellung und der in Fig. 2 gezeichneten Ruhe- bzw. Wandprojektions-Stellung verstellen zu können.

Die Verstellung der Verstelleinrichtung 22 zwischen der Wandprojektions-Stellung und der Mattscheibenprojektions-Stellung kann manuell oder bei einer komfortableren Ausbildung des Diaprojektors 10 mittels eines Antriebsmotors erfolgen, der in Fig. 1 durch einen Block 68 angedeutet ist. Der Antriebsmotor 68 wirkt hierbei z.B. auf das Basisteil 35 der Grundeinrichtung 26 ein, was in Fig. 1 durch den Pfeil 70 schematisch angedeutet ist.

In den Figuren 1 und 2 sind gleiche Einzelheiten jeweils mit denselben Bezugsziffern bezeichnet.

## Patentansprüche

1. Diaprojektor zur Wand- und Mattscheibenprojektion, bestehend aus:
Einer Diaprojektionseinheit (10) mit einem Projektionslinsensystem (12);
einem Umlenkspiegelsystem (14, 16, 18) und einer Mattscheibe (20), die an einer zur Mattscheibenprojektion dem Projektionslinsensystem (12) vorsetzbaren Verstelleinrichtung (22) montiert sind, wobei das Umlenkspiegelsystem (14, 16, 18) einen dem Projektionslinsensystem (12) vorsetzbaren ersten Spielgel (14), einen zweiten Spiegel (16) und einen dritten Spiegel (18) aufweist, und die Verstelleinrichtung (22) derart gestaltet ist, daß in der Mattscheibenprojektionsstellung ein vergrößertes, aufrechtes Bild aus die Mattscheibe (20) projiziert wird, indem ein vom Linsensystem (12) kommender, divergierender Projektionslichtstrahl zum ersten Spiegel (14), von dort zum zweiten Spiegel (16), vom zweiten Spiegel (16) zum dritten Spiegel (18) und von diesem zur Mattscheibe (20) umgelenkt wird,
**dadurch gekennzeichnet,**
daß die Verstelleinrichtung (22) zusammen mit der Mattscheibe (20) und dem Umlenkspiegelsystem (14, 16, 18) zur Wandprojektion in einem unter dem Diaprojektor (10) vorhandenen Gehäuseabteil (24) platzsparend zusammengelegt unterbringbar und zur Mattscheibenprojektion aus dem Gehäuseabteil (24) herausbewegbar ist, wobei die Verstelleinrichtung (22) eine aus dem Gehäuseabteil (24) linear herausbewegbare und um eine erste Gelenkachse (40) vor das Projektionslinsensystem (12) hochschwenkbare, teleskopartig verlängerbare Grundeinrichtung (26) zur Halterung des ersten Spiegels (14) und des dritten Spiegels (18) aufweist, welche mittels Verbindungsorganen (32, 34) mit einer Spiegelhalterung (28) für den zweiten Spiegel (16) und einer Halterung (30) für die Mattscheibe (20) gelenkig verbunden ist.

2. Diaprojektor nach Anspruch 1, **dadurch gekennzeichnet**, daß die teleskopartig verlängerbare Grundeinrichtung (26) auf zwei gegenüberligenden Seiten des Diaprojektors (10) je ein Basisteil (35) und ein relativ zum Basisteil (35) teleskopartig verstellbares Verlängerungsteil (36) aufweist, wobei jedes Basisteil (35) im Gehäuseabteil (24) linear beweglich geführt und um die erste Gelenkachse (40) vor das Projektionslinsensystem (12) hochschwenkbar ist.

3. Diaprojektor nach Anspruch 2, **dadurch gekennzeich****net,** daß der erste Spiegel (14) an den Basisteilen (35) beweglich gelagert ist, und der dritte Spiegel (18) an den Verlängerungsteilen (36) befestigt ist.

4. Diaprojektor nach einem der Ansprüche 2 oder 3, **da****durch gekennzeichnet,** daß die Spiegelhalterung (28), an welcher der zweite Spiegel (16) befestigt ist, auf besagten zwei gegenüberliegenden Seiten des Diaprojektors mit dem zugehörigen Verlängerungsteil (36) mittels je zweier ungleich langer Verbindungsorgane (32, 34) gelenkig verbunden ist, wobei:
Jedes der längeren Verbindungsorgane (34) mit seinem ersten Endabschnitt (56) mit dem jederzeit am Basisteil (35) geführten ersten Endabschnitt (58) des zugehörigen Verlängerungsteiles (36) gelenkig verbunden ist;
jedes der kürzeren Verbindungsorgane (32) mit seinem ersten Endabschnitt (46) mit dem aus dem Basisteil (35) teleskopartig herausbewegbaren zweiten Endabschnitt (50) des zugehörigen Verlängerungsteiles (36) gelenkig verbunden ist; und
auf jeder Seite des Diaprojektors (10) die jeweils zweiten Endabschnitte (52, 62) des kürzeren und des längeren Verbindungsorganes (32; 34) an voneinander beabstandeten Stellen mit der Spiegelhalterung (28) für den zweiten Spiegel (16) gelenkig verbunden sind.

5. Diaprojektor nach einem der Ansprüche 2 bis 4, **da****durch gekennzeichnet,** daß die Halterung (30) für die Mattscheibe (20) mit der Spiegelhalterung (28) für den zweiten Spiegel (16) und mit dem jeweils zweiten Endabschnitt (62) jedes der beiden seitlichen längeren Verbindungsorgane (34) gelenkig verbunden ist.

6. Diaprojektor nach einem der Ansprüche 2 bis 5, **da****durch gekennzeichnet,** daß die Mattscheibe (20) mit ihrer zugehörigen Halterung (30), die Spiegelhalterung (28) für den zweiten Spiegel (16) und die Verbindungsorgane (32, 34) in den zwischen den beiden seitlichen Verlängerungsteilen (36) der teleskopartig verstellbaren Grundeinrichtung (26) festgelegten Raum zusammenklappbar sind.

7. Diaprojektor nach einem der vorhergehenden Ansprüche, **dadurch gekennzeichnet,** daß die Verstelleinrichtung (22) mittels eines Antriebsmotors (68) zwischen der platzsparend zusammengelegten Wandprojektionsstellung und der aufgeschwenkten Mattscheibenprojektionsstellung verstellbar ist.

## Claims

1. Slide projector for screen projection and ground glass plate projection, comprising:
a slide projection unit (10) with a projection lens system (12);
a deflecting mirror system (14, 16, 18) and a ground glass plate (20), which are mounted on an adjustment device (22) which can be placed in front of the projection lens system (12) for ground glass plate projection, the deflecting mirror system (14, 16, 18) exhibiting a first mirror (14) which can be placed in front of the projection lens system (12), a second mirror (16) and a third mirror (18), and the adjustment device (22) being designed in such a manner that in the ground glass plate projection position an enlarged, erect image is projected onto the ground glass plate (20), in that a divergent projection light beam coming from the lens system (12) is deflected to the first mirror (14), from there to the second mirror (16), from the second mirror (16) to the third mirror (18) and from the latter to the ground glass plate (20), characterized in that for screen projection, the adjustment device (22) together with the ground glass plate (20) and the deflecting mirror system (14, 16, 18) can be accommodated in such a manner as to be collapsed in a space-saving manner in a housing compartment (24) present below the slide projector (10) and, for ground glass plate projection, can be moved out of the housing compartment (24), the adjustment device (22) exhibiting a base device (26), which can be moved linearly out of the housing compartment (24) and which can be swung up about a first articulation axis (40) in front of the projection lens system (12) and which can be extended in a telescopic manner, for retaining the first mirror (14) and the third mirror (18), which base device is articulatedly connected by means of connecting components (32, 34) to a mirror retaining device (28) for the second mirror (16) and a retaining device (30) for the ground glass plate (20).

2. Slide projector according to Claim 1, characterized in that the telescopically extensible base device (26) exhibits, on two opposite sides of the slide projector (10), a respective base part (35) and an extension part (36) which is telescopically adjustable relative to the base part (35), each base part (35) being linearly movably guided in the housing compartment (24) and being capable of being swung up about the first articulation axis (40) in front of the projection lens system (12).

3. Slide projector according to Claim 2, characterized in that the first mirror (14) is movably mounted on the base parts (35), and the third mirror (18) is secured to the extension parts (36).

4. Slide projector according to one of Claims 2 or 3, characterized in that the mirror retaining device (28), to which the second mirror (16) is secured, is connected, on said two opposite sides of the slide projector, to the associated extension part (36) by means of in each instance two unequally long connecting components (32, 34) in an articulated manner, in which:
each one of the longer connecting components (34) is articulatedly connected by its first end portion (56) to the first end portion (58), guided at any time on the base part (35), of the associated extension part (36);
each one of the shorter connecting components (32) is articulatedly connected by its first end portion (46) to the second end portion (50), which can be telescopically moved out of the base part (35), of the associated extension part (36); and
on each side of the slide projector (10) the respective second end portions (52, 62) of the shorter and of the longer connecting components (32; 34) are articulatedly connected, at mutually spaced positions, to the mirror retaining device (28) for the second mirror (16).

5. Slide projector according to one of Claims 2 to 4, characterized in that the retaining device (30) for the ground glass plate (20) is articulatedly connected to the mirror retaining device (28) for the second mirror (16) and to the respective second end portion (62) of each one of the two lateral longer connecting components (34).

6. Slide projector according to one of Claims 2 to 5, characterized in that the ground glass plate (20) with its associated retaining device (30), the mirror retaining device (28) for the second mirror (16) and the connecting components (32, 34) can be folded together into the space defined between the two lateral extension parts (36) of the telescopically adjustable base device (26).

7. Slide projector according to one of the preceding claims, characterized in that the adjustment device (22) is adjustable by means of a drive motor (68) between the screen projection position collapsed in a space-saving manner and the swung-up ground glass plate projection position.

## Revendications

1. Appareil de projection et de rétroprojection de diapositives comprenant :
Une unité de projection (10) dotée d'un système de lentilles (12) ;
Un jeu de miroirs orientables (14, 16, 18) et un écran dépoli (20), montés sur un dispositif de réglage (22) que l'on peut déplacer vers le système de lentilles (12) pour obtenir la rétroprojection, le jeu de miroirs (14, 16, 18) comportant à cet effet un premier miroir (14) mobile en direction dudit système de lentilles (12), un second et un troisième miroir (16, 18), et le dispositif de réglage (22) étant configuré de telle manière qu'en position de rétroprojection, une image agrandie est projetée à l'endroit sur l'écran dépoli (20), un rayon lumineux permettant la projection étant issu du système de lentilles (12) d'abord vers le premier miroir (14), puis divergeant de celui-ci vers le second miroir (16), allant ensuite dudit second miroir (16) vers le troisième miroir (18), pour terminer enfin de ce dernier vers l'écran dépoli (20),
caractérisé en ce que
le dispositif de réglage (22), ainsi que l'écran dépoli (20) et le jeu de miroirs orientables (14, 16, 18) sont repliables dans une partie formant boîtier (24) située sous le projecteur de diapositives (10) pendant les projections murales et dépliables hors dudit boîtier (24) pour les rétroprojections, le dispositif de réglage (22) comprenant une structure de base (26) à géométrie variable que l'on peut déplier télescopiquement de manière à l'extraire linéairement du boîtier (24) et à la faire tourner autour d'un premier axe (40) de rotation pour la placer devant le système de lentilles (12), ladite structure supportant le premier et le troisième miroir (14, 18) et ayant une liaison pivotante avec le support (28) du second miroir (16) au moyen d'organes de liaison (32, 34) et avec un support (30) de l'écran dépoli (20).

2. Appareil de projection selon la revendication 1, caractérisé en ce que la structure de base (26) dépliable télescopiquement présente sur deux côtés opposés du projecteur (10) une partie de base (35) et une partie (36) dépliable télescopiquement par rapport à cette base (35), chacune de ces dernières étant mobile linéairement dans le boîtier (24) et pivotable autour du premier axe (40) de rotation de manière à varier géométriquement devant le système de lentilles (12).

3. Appareil de projection selon la revendication 2, caractérisé en ce que le premier miroir (14) est relié à ladite partie de base (36) de manière à être mobile par rapport à elle, et le troisième miroir (18) est solidarisé à la partie dépliable (36).

4. Appareil de projection selon l'une des revendications 2 et 3, caractérisé en ce que le support de miroir (28) auquel est fixé le second miroir (16) est relié aux parties dépliables (36) au moyen de deux organes de liaison (32, 34) articulés, de longueurs inégales, placés sur les deux côtés se faisant face du projecteur (10) ; chacun desdits organes (34) les plus longs pivote à sa première extrémité (56) à la première extrémité de la partie dépliable (36) correspondante, celle qui conduit à la partie de base (35) ; chacun des organes (32) les plus courts est articulé à sa première extrémité (46) au niveau de la seconde extrémité de la partie dépliable (36), celle qui est éloignée de la partie de base (35) ; et, sur chaque côté du projecteur (10), chaque seconde extrémité (52, 62) des organes courts et longs (32, 34) est articulée au support (28) du second miroir (16), à distance l'une de l'autre.

5. Appareil de projection selon l'une des revendications 2 à 4, caractérisé en ce que le support (30) de l'écran dépoli (20) est articulé sur le support (28) du second miroir (16) et sur les secondes extrémités (62) des deux organes de liaison (34) latéraux longs.

6. Appareil de projection selon l'une des revendications 2 à 5, caractérisé en ce que l'écran dépoli et son support (30), le support (28) du second miroir (16) et les organes de liaison (32, 34) sont repliés dans l'espace entre les deux parties latérales repliables (36) de la structure de base (26) télescopique réglable.

7. Appareil de projection selon l'une quelconque des revendications précédentes, caractérisé en ce que le dispositif de réglage (22) permet le réglage au moyen d'un moteur d'entrainement (68) entre la position repliée pour la projection murale procurant un gain de place et la position dépliée permettant la rétroprojection.
